# EUROPEAN PATENT APPLICATION

(11) **EP 0 852 305 A1**
(43) Date of publication of application: **08.07.1998**
(21) Application number: 97310695.8
(22) Date of filing: 31.12.1997
(51) Int. Cl.: F16G 13/04, F16H 7/06

(54) **Backdrive silent chain and sprocket**

(30) Priority: 06.01.1997 US 778835
(71) Applicant: BORG-WARNER AUTOMOTIVE, INC., Sterling Heights, Michigan 48311-8022 (US)
(72) Inventor: Hummel, John A., Ithaca, N.Y. 14850 (US); Ledvina, Timothy J., Groton, N.Y. 13073 (US)
(74) Representative: Lerwill, John

(57) **Abstract**

A chain and sprocket power transmission system includes at least one chain (14) and a plurality of sprockets (50,70) mounted on shafts. A driving shaft causes rotation of a plurality of driven shafts rotating in a first direction, and at least one backdrive shaft rotating in a second direction. The chain comprises inverted teeth (224,264) adapted to mesh with the teeth (52) of the sprockets rotating in the first direction, and a body portion (252) adapted to provide power transmission with the sprocket teeth (72) of the backdrive sprocket. Thus, a single endless chain causes rotation of a plurality of camshafts rotating in a first direction as well as a backdrive shaft, such as balance shaft, rotating in the opposite direction.

## Description

### BACKGROUND OF THE INVENTION

### Field of the Invention

The present invention relates generally to power transmission chains. The invention has particular application to power transmission chains of the inverted tooth or silent chain variety, which are used in engine timing applications as well as in the transfer of power from an engine to a transmission or in a transfer case of a four-wheel-drive vehicle. The invention also has particular application with engine timing system.

### Description of the Prior Art

Power transmission chains are widely used in the automotive industry. Such chains are used for engine timing drives as well as for the transfer of power from the engine to the transmission or for the transfer of power in a transfer case. Power transmission chains are also widely used in industrial applications.

One type of power transmission chain is referred to as "silent chain". Such chain is formed of interleaved sets of inverted tooth links. A set or rank of links is assembled from several links positioned alongside of or adjacent to each other. The links are connected by pivot means, which are typically round pins received in a pair of apertures. An example of silent chain is found in U.S. Patent No. 4,342,560, which is incorporated herein by reference.

Conventional silent chains typically include both guide links and driving links. The guide links may be positioned on the outside edges of alternate sets of links. The guide links typically act to position the chain laterally on the sprocket. Guide links typically do not mesh with the sprocket teeth.

The inverted tooth links, or sprocket engaging links, provide the transfer of power between the chain and the sprocket. Each inverted tooth link typically includes a pair of apertures and a pair of depending toes or teeth. Each toe is defined by an inside flank and an outside flank. The inside flanks are joined at a crotch. The inverted tooth links are typically designed so that at least some of the links contact the sprocket teeth to transfer power between the chain assembly and the sprocket. The inverted tooth links, or driving links, contact the sprocket teeth along their inside link flanks or their outside link flanks or combinations of both flanks. The contacts between the flanks and the sprocket teeth can be of the type which provide a power transfer, or can be of the nature of an incidental contact, or can include root contact or side contact.

The links also typically include a body portion that extends above the toes. That is, the inverted teeth extend downwardly toward the sprocket from the body portion of the link. The body portion connects the teeth and the crotch portion of the link. Typically, the body portion does not provide a sprocket tooth contacting surface. Additionally, the body portion may be configured to provide identification of link type, as described in U.S. Patent No. 4,509,323 and U.S. Patent No. 4,509,937 or configured to match the shape of a chain tensioner, as described in U.S. Patent No. 5,176,585. However, the body portion is not shaped or configured to provide a sprocket tooth contacting surface.

A conventional silent chain drive is comprised of an endless silent chain wrapped about at least two sprockets supported by shafts. Movement of a driving sprocket causes power transmission through the chain and consequent movement of a driven sprocket. In an engine timing drive application, the driving sprocket may be mounted on the engine crankshaft and the driven sprocket mounted on a valve camshaft. The rotation of the camshaft is thus controlled by the rotation of the crankshaft through the chain. A chain for an engine timing drive application is shown in U.S. Patent No. 4,758,210, which is incorporated herein by reference.

Engine timing drive assemblies may also include a balance shaft. For example, in a chain drive assembly, a crankshaft may contain a driving sprocket and the chain assembly would connect the crankshaft sprocket to a pair of driven sprockets at the ends of overhead camshafts. The chain assembly would therefore drive the overhead camshafts in the same direction as the crankshaft.

In such an assembly, there is often a need for a balance shaft for use with certain engine configurations. The balance shaft is rotated in a direction opposite the direction of the crankshaft and camshafts. There is a need for a chain drive assembly which will rotate the balance shaft as well as the camshafts with a single endless chain assembly.

Prior art U.S. Patent No. 1,956,942 discloses a chain and sprocket assembly having inverted links which cause rotation in a reverse direction of a sprocket in the chain and sprocket assembly. The chain assembly has sprocket teeth spaced to allow placement of a single link between a pair of sprocket teeth. The links drive the sprocket teeth by a contact between the inside flanks of the links and a seating of the links on the sprocket tooth. The links in adjacent rows are inverted to allow the inverted links to drive the second sprocket in the assembly in a reverse direction.

The present invention utilizes a chain assembly in which all of the links are positioned in the same direction. That is, the links are all positioned with the inverted teeth in a direction downward toward the sprocket. A relief of the body portion of the links allows driving of a second sprocket in the assembly in a reverse direction. In addition, the arrangement of the links may provide spaces between the link teeth to receive the second sprocket teeth. The second sprocket may be connected to the aforementioned balance shaft.

Accordingly, it is an object of the present invention to provide a silent chain capable of providing power transmission with at least one sprocket rotating in a first direction and at least one sprocket rotating in a second direction. It is a further object of the present invention to provide a silent chain comprised of links having inverted teeth adapted to drivingly contact a first sprocket, and having a backside opposite the inverted teeth including a body adapted to drivingly contact a second sprocket. It is another object of the present invention to provide a silent chain link having a pair of inverted teeth and a body, with the body adapted to provide a contact surface for a sprocket. It is yet another object of the present invention to provide a silent chain capable of transmitting power from a crankshaft to a plurality of camshafts rotating in a first direction as well as to a balance shaft rotating in a second direction.

### SUMMARY OF THE INVENTION

The present invention is directed to a chain and sprocket power transmission system. More particularly, the present invention is directed to a silent chain having links engaging a first sprocket rotating in a first direction, and a link back adapted to engage a second sprocket rotating in a second direction. The chain is constructed of rows of link plates, interleaved and connected by pivot means, such as pins. The driving links have a pair of inverted teeth adapted to engage the teeth of a first sprocket, connected by a body portion, which is adapted to allow driving of a second sprocket rotating in the direction opposite the direction of rotation of the first sprocket.

In one embodiment of the invention, the links are arranged in a lacing pattern such that pockets are formed between the link plates. The teeth of the second sprocket, such as a backdrive or balance shaft sprocket, are received in the pockets such that the chain transmits power to the sprocket.

Each pocket is bounded by the space between link plates within the lacing pattern. In the direction of chain travel (the "longitudinal" direction), each pocket is formed between the end portions of link plates in adjacent rows within a single column. In the direction of the width of the chain (the "lateral" direction), a pocket formed in one column of link plates is bounded by the middle portions of the link plates in laterally adjacent columns.

In one embodiment of the present invention, the link plate bodies have end portions at the longitudinal ends of the link plate. These end portions may have a relief, such as a reduction in the height of the link back. This relief facilitates an interlocking fit between the link back and a backdrive sprocket tooth, as the sprocket tooth engages the pocket bordered by the link back.

In another embodiment, the width of the pockets is defined by the width of the columns of link plates in the lacing pattern. Instead of, for instance, columns having a lateral width of a single link plate, the present invention may employ columns having a lateral width of two or more link plates. In other words, the lacing pattern provides pairs of links adjacent one another across the width of the chain, instead of single links spaced from each other. These variations in the width of the columns in the lacing pattern provide for a wider pocket between the link plates. A wider pocket allows a larger backdrive sprocket tooth to be received in the pocket, thus increasing the load that can be transmitted between the backdrive sprocket and the chain.

For a better understanding of these and other aspects and objects of the invention, reference should be made to the following detailed description taken in conjunction with the accompanying drawings.

### BRIEF DESCRIPTION OF THE DRAWINGS

For a more complete understanding of the invention, reference should be made to the embodiments illustrated in greater detail in the accompanying drawings and described below by way of examples of the invention. In the drawings, which are not to scale:
Figure 1 is a side elevational view of a power transmission drive of the present invention, employing a balance shaft;
Figure 2 is a plan view of one embodiment of the chain of the present invention;
Figure 3 is a side view of a portion of one embodiment of the present invention;
Figure 4 is a side view of one column of link plates of the chain shown in Figure 3;
Figure 5a is a side view of another column of link plates of the chain shown in Figure 3;
Figure 5b is a side view of the column of link plates of the chain shown in Figure 5a, engaging a sprocket;
Figure 6 is an overlapping side view of three link plates, including one prior art link plate;
Figure 7 is a top view of another embodiment of the present invention;
Figure 8 is a top view of still another embodiment of the present invention.

### DETAILED DESCRIPTION OF THE DRAWINGS

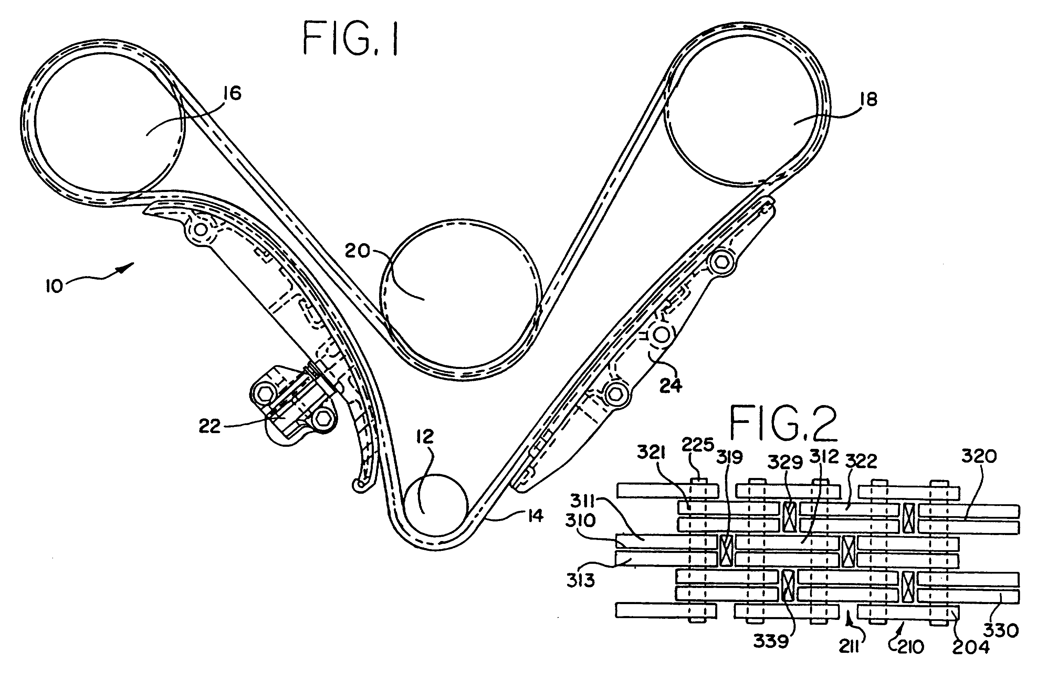

Turning now to the drawings, Figure 1 illustrates one embodiment of the chain and sprocket power transmission assembly 10 of the present invention. A chain 14 provides power transmission between a driving sprocket 12, and a plurality of driven sprockets. Each sprocket is mounted on a shaft, so that rotation of the driving shaft causes movement of the chain resulting in rotation of the driven shafts.

According to the present invention, the driven sprockets may include a plurality of sprockets 16, 18 rotating in the same direction as the driving sprocket 12, as well as one or more sprockets 20 rotating in the direction opposite to the driving sprocket 12 direction of rotation. In an engine timing system environment, the driving shaft may be a crankshaft, while the driven shafts may include camshafts rotating in the same direction as the crankshaft, and a balance shaft, rotating in the reverse direction. In order to provide proper tension and alignment of the chain, the power transmission system may also include one or more chain tensioners 22 and/or a chain guides 24.

As shown more clearly in Figure 2, the chain is constructed of link plates interleaved in a lacing pattern of rows and columns. A single row 210 of links extends laterally across the width of the chain. The rows are then interleaved with longitudinally adjacent rows 211 to form the endless chain assembly.

In order to provide interleaving, the links are connected by pins 225 inserted through apertures 222, 262 in each link. In some embodiments, the pins are round pins and associated round apertures. However, other pin configurations, such as rocker pins (not shown), may also be used for the purpose of the present invention.

In some embodiments, some rows of links include guide links 204, whose function is to maintain the position of the chain assembly laterally when that portion of the chain engages a sprocket. The guide links do not include any depending members or teeth for providing power transfer to the sprockets. These guide links may be positioned either along the laterally outside edges of a row, as shown in Figure 2, or within the lateral inside of the row (not shown), in which case a groove is provided in the sprocket to maintain the position of the guide link. Longitudinally, the guide links may be included, for instance, in every other row of links. Thus, guide rows, such as row 210 are interleaved with non-guide rows, such as 211, along the length of the chain.

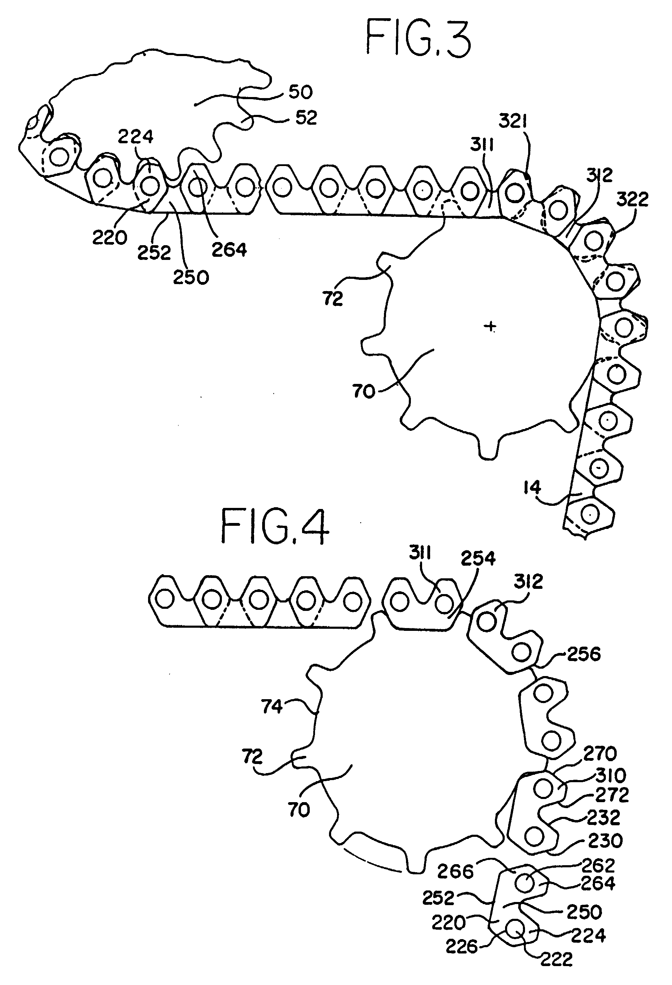

As shown in Figures 2, 3, and 4, the rows of links also include interleaved inside links 220 or articulating links. The links 220 typically have a pair of apertures 222, 262 and a pair of depending teeth 224, 264, or toes, forming a crotch. Other configurations, such as link plates having a single depending tooth, are known in the art and may also be employed within the scope of the present invention. As shown in Figure 3, the link teeth engage the sprocket teeth to provide power transmission.

Longitudinally, each link plate has a pair of end portions 226, 266, which are shown in Figure 4. The end portions are connected by a body portion 250 having a link back 252. Radially, the body portion is opposite the teeth, so that when the link plate teeth engage a sprocket tooth, the link back faces away from the sprocket tooth.

As shown in Figure 4, the teeth are defined by outside flanks 230, 270 and inside flanks 232, 272. The flanks of a link 220 may have a number of configurations, with the inside and outside flanks being straight or curved. The link can be symmetrical about a radial centerline between the apertures 222, 262 or can be asymmetrical about the centerline. Inside links of various configurations are well known in the art and may be employed within the scope of the present invention.

The distance between the centers of the apertures 222, 262 is defined as the pitch. Inside links having various pitch lengths may be adapted to mesh with sprockets of various configurations known in the art; for instance, the chain shown in Figure 3 is adapted to mesh with a 20 tooth crankshaft sprocket.

Figures 3-5 shown one embodiment of the present invention in operation. As shown in Figure 3, the inside links 220 of the chain 14 have teeth 224, 264 adapted to mesh with the teeth 52 of a first sprocket 50, such as a sprocket assembled on a crankshaft or a camshaft. The teeth 52 of the first sprocket 50 contact the teeth and seat in the crotch between the teeth 224, 264 of each inner link 220. The body portion 250 of each link is opposite the teeth 224, 264 and has a link back 252 spaced with other link backs in order to mesh with the teeth 72 a second sprocket 70, such as a sprocket assembled on a backdrive or balance shaft.

Figure 4 shows the contact between the sprocket 70 and one column 310 of the chain shown in Figure 3. The link plates 311, 312 of this column engage the teeth 72 of the backdrive sprocket 70. However, in contrast to the meshing between the inner teeth 224, 264 and the first sprocket 50, the teeth 72 of the backdrive sprocket 70 are received in pockets formed between the link backs 252 of the chain. Longitudinally, these pockets are formed between the end portions 226, 266 of the link plates within a single column 310 in the chain 14.

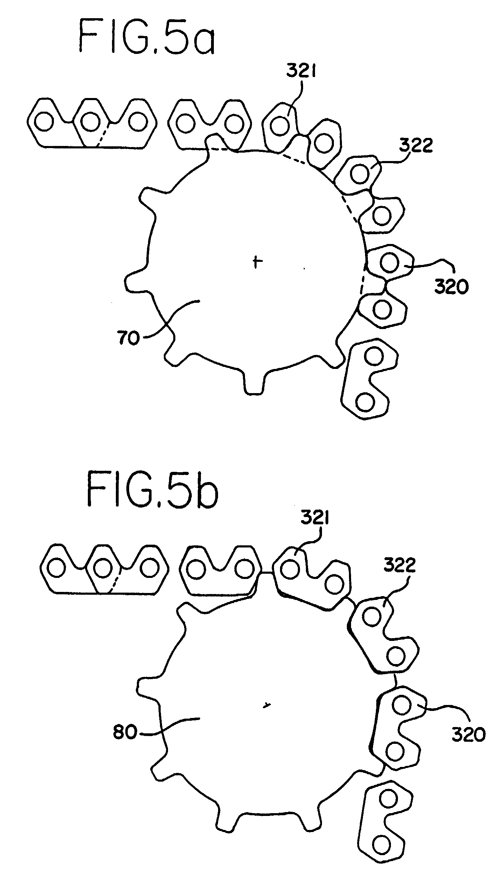

As shown in Figure 5b, the second sprocket 80 may be offset with respect to the first sprocket 70 by a predetermined offset. The predetermined offset may be one half sprocket tooth, as shown in Figures 5a and 5b. Other offset configurations, such as a one third tooth offset, may also be employed within the scope of the present invention.

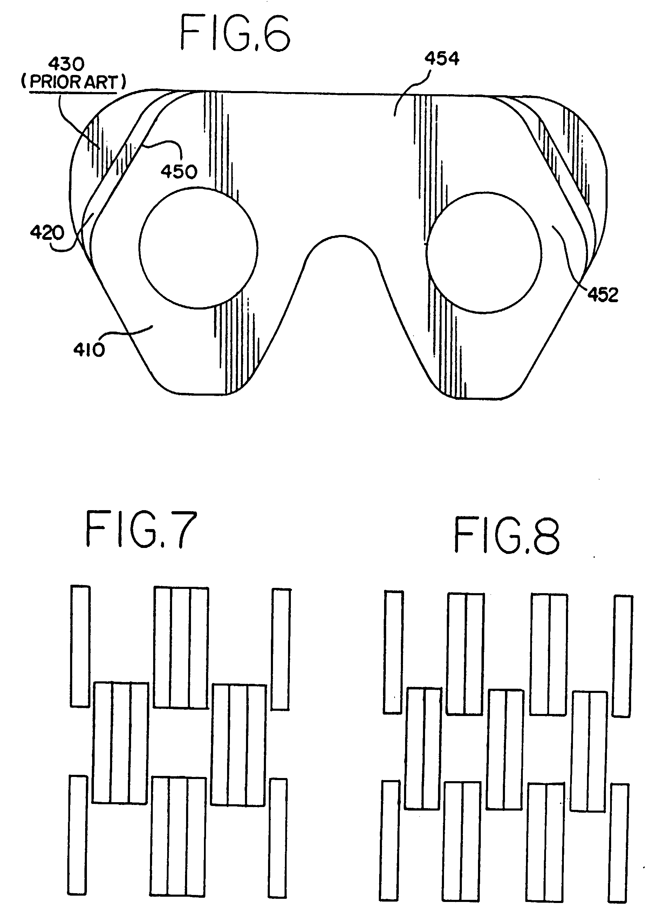

To facilitate the meshing of the backdrive sprocket teeth 72 with the chain 14 of one embodiment of the present invention, the end portions 226, 266 of at least some of the link plates may have a relief, such as a removal of a part of the end portion of the link back. Figure 6 is a side view of three link plates 410, 420, 430 including, for comparison, one link plate 430 of the prior art. The link plates 410, 420, which are two different embodiments of the present invention, have relieved end portions 450, 452 of the link back 454 compared to the prior art link plate 430.

As can be seen more clearly from Figure 4, this relief provides a surface 254 forming a pocket with adjacent teeth to provide a greater interlocking fit with the teeth 72 of the backdrive sprocket 70. A larger relief also allows a larger backdrive sprocket tooth to be received in the pocket between link plates, allowing different sizes of sprockets for use with the chain and the backdrive sprocket. The link plates 410, 420 shown in Figure 6 illustrate possible configurations for the relief. In addition, the contact surface 254 of the link back 252 need not be straight; a curved surface may also be employed within the scope of the present invention.

In the preferred embodiment, the relief is such that the surface 254 of the link back 252 which borders the pocket is offset approximately 30 degrees from the vertical, where the vertical is defined as a radius of the backdrive sprocket 70 passing through the end tip 256 of the link plate 252. Other means of longitudinally adjusting the size of the pockets, such as varying the pitch or link plate length in some or all of the columns or some or all of the rows, may also be employed within the scope of the invention. The key feature of one preferred embodiment, which is shown in Figure 6, is the removal of sufficient material from the end portions of the link to permit the sprocket tooth to enter the pocket to drive the link as well as placing the appropriate angle along the end portion for optimum sprocket tooth contact.

The backdrive sprocket may also be adapted to facilitate meshing with the chain. As can be seen in the embodiment of Figure 4, the full length of a link back 311 is supported in the root 74 between two backdrive sprocket teeth 72. The root 74 may therefore be adapted to provide an optimum interlocking fit with the link back of the link plate. For instance, the root area between two backdrive sprocket teeth may be flat between two sprocket teeth. Likewise, the size and shape of the link back 252 may be adapted to provide an optimum interlocking fit to the root of the backdrive sprocket 70. For instance, a straight link back may be employed with a sprocket having a straight tooth root. Alternatively, a slightly curved link back may be employed with a sprocket having a slightly curved tooth root. Preferably, the shape of the link back 252 is adapted to provide a large contact area between the link back and the sprocket tooth root.

The length of the root portion may also be adjusted to facilitate the interlocking fit. For instance, the root may occupy a circumferential length equal to the length of a link back 252, or approximately twice the pitch length of the chain 14. In addition, the size of the backdrive sprocket teeth may be adapted to the size of the pockets of the chain. For instance, the backdrive sprocket may have sprocket teeth 72 smaller than the size of the first sprocket teeth 52 to facilitate meshing with the chain 14.

Figure 5a shows a different column 320 of the chain shown in Figure 3, such as a column 320 adjacent to the column 310 shown in Figure 4. In this embodiment of the invention, the link plates 311, 312 of a first column 310 are laterally offset, or staggered, relative to the link plates 321, 322 of a second column 320. However, the apertures of the link plates of both columns 310, 320 are aligned, allowing the columns to be laterally connected by pins 225.

The backdrive sprocket teeth 72 may be adapted to the staggering of the pockets in the lacing pattern of link plates. As can be seen from Figure 2, each pocket 319, 329 is formed longitudinally between the end portions of adjacent link plates within a column 310, and is formed laterally between the body portions of link plates in adjacent columns 320, 330. Therefore, a pocket 319 of one column 310 is staggered laterally with respect to the pockets 329, 339 of laterally adjacent columns 320, 330. Consequently, the backdrive sprocket teeth may also be arranged in staggered columns. In the embodiment shown in Figure 2, the backdrive sprocket teeth are staggered by one half tooth offset, although other configurations could be employed within the scope of the present invention. Figures 5a and 5b also show sprockets offset by one half tooth. The staggering of the backdrive sprocket teeth may also be accomplished by means well known in the art, such as employing a sprocket having teeth arranged in a plurality of columns, or employing a plurality of sprockets arranged on a single shaft.

As can be seen from Figure 2, the widths of the pockets for receiving the backdrive sprocket teeth are determined by the lateral width of the columns of link plates. For instance, one column 310 of link plates has a lateral width of two link plates 311, 313, indicating that the link plates in that column are laterally aligned, and are laterally staggered with respect to the link plates of adjacent columns 320, 330. Consequently, the width of a pocket 319 in that column 310 is the width of two link plates 311, 313. A backdrive sprocket tooth would necessarily have a width of less than approximately two link plates in order to mesh with the pocket 319. However, a sprocket tooth having a width greater or less than the width of two link plates could be employed by adjusting the width of the column 310. For instance, a backdrive sprocket having wider teeth could be employed with a chain constructed of columns having width of three or four link plates. In addition, the width of the columns could be adjusted by other means within the scope of the present invention, such as employing link plates having differing thicknesses in some or all of the columns, or in some or all of the rows.

Figure 7 shows the lacing pattern of another embodiment of the present invention. Figure 8 shows the lacing pattern of still another embodiment of the present invention. Other lacing patterns could also be employed within the scope of the present invention.

While several embodiments for the invention are illustrated, it will be understood that the invention is not limited to these embodiments. Those skilled in the art to which the invention pertains may make modifications and other embodiments employing the principles of this invention, particularly upon considering the foregoing teachings.

## Claims

1. A power transmission chain comprising:
a plurality of interleaved sets of links, pivot members connecting adjacent sets of links, the links of said chain each having a pair of toes separated by a crotch, each of said toes being disposed in the direction of a first sprocket and adapted to drivingly contact the teeth of said first sprocket, each toe being defined by an outside flank and an inside flank, the inside flanks of each link being joined at the crotch, each link defining a pair of apertures for receiving said pivot members,
each of said links having a body portion connecting said toes and crotch, said body portion having end portions constructed and arranged with the portions of adjacent links to receive the teeth of a second sprocket between said end portions.

2. The power transmission chain of claim 1 wherein said links form columns of links along the length of the chain, said sprocket teeth being received between said end portions of adjacent links in said columns.

3. The power transmission chain of claim 1 wherein said link end portions form sprocket tooth contact surfaces, said end portions being relieved so that said contact surfaces form an acute angle with a vertical.

4. The power transmission chain of claim 2 wherein said sprocket teeth are received in a location laterally between the apertures of the link in an adjacent column.

5. The power transmission chain of claim 1 wherein said body portion has a top portion, said top portion configured to contact the root portion of said second sprocket.

6. A power transmission chain of claim 1 in combination with a pair of sprockets, said first sprocket being constructed and arranged to rotate in a first direction, said second sprocket being constructed and arranged to rotate in the opposite direction.

7. The power transmission chain and sprocket combination of claim 6, wherein said second sprocket having a plurality of portions, a first portion of said sprocket having teeth spaced to receive a body portion of a link of said chain between said sprocket teeth, said sprocket teeth being driven by contacting surfaces of said link body portion.
